# EUROPEAN PATENT SPECIFICATION

(11) **EP 4 507 865 B1**
(45) Date of publication and mention of the grant of the patent: **10.06.2026**
(21) Application number: 23720181.9
(22) Date of filing: 03.04.2023
(51) Int. Cl.: B29B 11/14, B29C 49/48, B29C 49/06, B29L 31/00

(54) **BLOWING MOLD FOR MOLDING A CONTAINER**
BLASFORM ZUM FORMEN EINES BEHÄLTERS
MOULE DE SOUFFLAGE POUR MOULAGE D'UN RÉCIPIENT

(30) Priority: 12.04.2022 IT 202200007196
(43) Date of publication of application: 19.02.2025
(73) Proprietor: S.I.P.A. Società Industrializzazione Progettazione e Automazione S.p.A., 31029 Vittorio Veneto (IT)
(72) Inventor: CABONI, Martino, 31029 Vittorio Veneto (IT); DA LOZZO, Silvio, 31029 Vittorio Veneto (IT); ZOPPAS, Matteo, 31015 Conegliano (IT)
(74) Representative: de Alteriis, Renato
(86) International application number: PCT/IB2023/053341
(87) International publication number: WO 2023/199162

(56) References cited:
- EP-B1- 0 627 297
- CH-A5- 620 394
- FR-A1- 2 874 193
- JP-A- S5 662 132
- US-A1- 2011 256 256

## Description

### Field of the invention

The present invention relates to the field of producing plastic containers by blow molding preforms. In particular, the invention relates to a component (or striker plate) of the blowing mold adapted to abut against the neck ring of the preform when the blowing mold is closed. The invention also relates to a container obtained by means of a blowing mold.

### Background art

Plastic containers, bottles, for example, conventionally are produced by blow molding a preform. The molds used in this process are called blow molds.

The preforms are typically provided with a neck ring which is used to support the preform.

In blow molding processes, the neck of the preform is not modified during the molding.

Blow molds are provided with a support adapted to abut against the neck ring of the preform so that the part from the neck ring to the opening of the neck remains outside the mold. A support designed to serve this function is also called a striker plate.

When the mold is closed, the molding surfaces extend around a same axis, also called axis of the mold.

The axis of the preform in particular is the axis around which the neck extends and which crosses the bottom of the preform.

Typically, the molding surfaces of a blowing mold are thermally conditioned (heated or cooled as a function of the process to be performed).

To obtain the blown container according to what is designed, specific areas of the mold must come into contact with specific areas of the preform.

In certain cases, the rotation of the preform around the axis thereof may be disadvantageous.

Therefore, it is important for the preform not to rotate around the axis thereof, in particular when it is arranged in the mold.

Disadvantageously, the preform may actually rotate around the axis thereof when it is in the mold, for example when it is inserted into the mold and/or when the mold is closed.

It is also desirable for the axis of the preform to coincide with the axis of the mold when the preform is in the mold.

However, disadvantageously, the axis of the preform may actually not coincide with the axis of the mold, i.e. the preform may not be centered with the axis of the mold. Therefore, the need is felt to overcome at least the problem relating to the rotation of the preform around the axis thereof, and possibly also the problem relating to the decentering of the preform, i.e., relative to the axis of the preform not coinciding with the axis of the mold.

FR2874193 describes a mold disadvantageously designed to function exclusively with a particular type of preform provided with a specific projection on the part of the preform above the neck ring. The mold in FR2874193 is provided with two driving elements (*organes d'entrainement*) which disadvantageously axially protrude above the abutment surface for the neck ring of the preform. The mold in FR2874193 is configured so that the two driving elements act in conjunction with the relief of the preform so that the preform rotates around the axis thereof when the mold is closed.

### Summary of the invention

It is an object of the present invention to provide a blowing mold which allows avoiding, or at least minimizing, the rotation of a preform around the axis thereof when it is in the blowing mold.

It is another object of the present invention to provide a blowing mold which also allows arranging and maintaining a preform so that the axis of the preform coincides with the axis of the mold, in particular with the axis of the closed mold.

It is an object of the present invention to provide a mold which in addition to achieving at least one of the aforesaid objects, is simple to construct and can be used with conventional preforms, in particular not provided with the aforesaid relief above the neck ring which, according to the prior art, is required in order to rotate the preform to orient it.

The present invention achieves at least one of such objects and other objects which will become apparent in light of the present description, by means of a blowing mold for molding a container, in particular a plastic bottle, by blow molding a preform having a neck and a neck ring,
the blowing mold being adapted to be opened and closed and comprising at least two parts which, when the blowing mold is closed, form a support, or striker plate, adapted to abut against the neck ring of the preform;
wherein a surface of said support is provided with one or more protrusions adapted to come into contact with the portion of the preform below the neck ring, in particular to prevent a rotation thereof.

In other words, at least one part of said at least two parts is provided with one or more protrusions adapted to come into contact with the neck of the preform, in particular to prevent a rotation thereof.

In particular, said one or more protrusions are adapted to come into contact with the portion of the preform below the neck ring of the preform to prevent a rotation of the preform when it is arranged in the mold, in particular to prevent a rotation of the preform around the axis around which the neck of the preform extends.

Said one or more protrusions advantageously are adapted to come into contact with the portion of the preform below the neck ring. In particular, said one or more protrusions are arranged to come into contact with the portion below the neck ring of the preform.

Each of said one or more protrusions is adapted to leave a corresponding impression on the container being molded. Each impression substantially is a recess or indentation.

Advantageously, the mold according to the invention does not require the preform to be positioned in the mold with a specific orientation. In particular, the preform may be arranged in the mold according to the invention with a random orientation.

Advantageously, the blowing mold according to the invention does not require the use of preforms provided with a specific relief above the neck ring for the orientation of the preform, as instead disadvantageously is required in the above-mentioned known mold.

Advantageously, the blowing mold according to the invention is easy and affordable to make. In particular, the blowing mold is simple to construct. More specifically, contrary to the above-mentioned known mold, the blowing mold according to the invention does not provide using driving elements which axially protrude above the support (or striker plate), which are intended to act in conjunction with the aforesaid relief of the preform described in the aforesaid document so that the preform rotates around the axis thereof when the mold is closed.

Therefore, advantageously a hollow tubular body may be used with a mold according to the invention, the hollow tubular body being adapted to abut against the upper surface of the neck ring and adapted to blow the preform, which tubular body is simpler to construct than a tubular body which instead must be used with a known mold mentioned above.

The invention also relates to a container, according to claim 16, on which there are one or more impressions, each impression being generated by a respective protrusion of said one or more protrusions.

Advantageously, also one protrusion alone is sufficient to avoid, or at least minimize, the rotation of the preform around the axis thereof, in particular when the preform is in the mold, in particular when the mold is closed.

In any case, said surface may be provided with more than one protrusion to better prevent the rotation of the preform around the axis thereof.

When more than one protrusion is provided, with a suitable arrangement of protrusions, a preform advantageously may be arranged and maintained so that the axis of the preform coincides with the axis of the mold, in particular with the axis of the closed mold.

For example, at least two diametrically opposite protrusions may be provided when the blowing mold is closed; or three protrusions may be provided, arranged at about 120° from one another, when the mold is closed.

Further features and advantages of the invention will become more apparent in the light of the detailed description of exemplary, but non-exclusive embodiments thereof.

The dependent claims describe particular embodiments of the invention.

### Brief description of the drawings

In the description of the invention, reference is made to the accompanying drawings, which are provided by way of non-limiting example, in which:
Figure 1 shows a perspective view of an example of a blowing mold according to the invention, when it is closed;
Figure 2 shows a detail of Figure 1;
Figure 3 shows a perspective view of the blowing mold in Figure 1, when it is open;
Figure 4 shows detail A in Figure 3;
Figure 5 shows a top view of the mold in Figure 1, when it is closed;
Figure 6 shows detail B in Figure 5;
Figure 7 shows a detail of Figure 6;
Figure 8 shows a perspective view of an example of a preform adapted to be blow molded by means of a blowing mold according to the invention;
Figure 9 shows a perspective view of an example of a container, in particular a bottle, obtained by means of a blowing mold according to the invention;
Figure 10 shows detail C in Figure 9.

The same elements or components have the same reference numerals.

### Description of embodiments of the invention

With reference to the drawings, an example of a blowing mold 1 according to the invention is described.

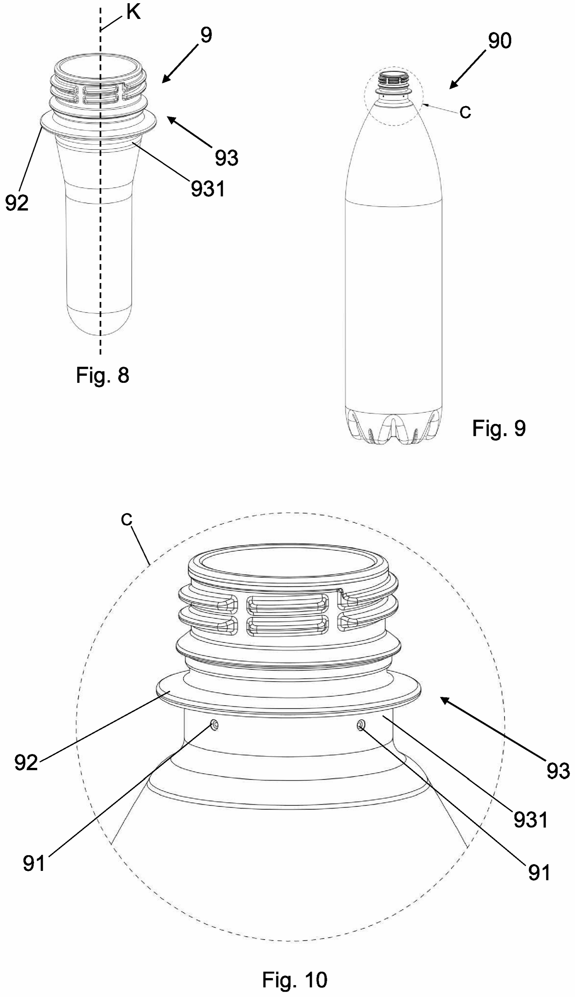

The blowing mold 1 serves to mold a container 90, in particular a plastic bottle (Figure 9), by blow molding a preform 9 (Figure 8) having a neck 93 and a neck ring 92 (or support ring). Preform 9, and therefore also container 90, are made of PET, for example. The neck ring 92 is adapted to be used to support preform 9.

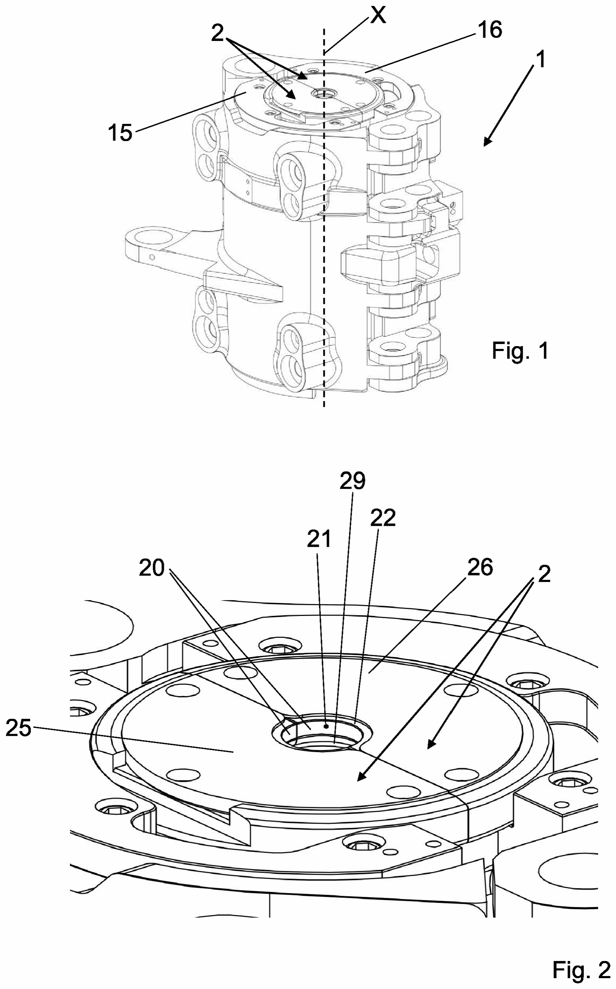

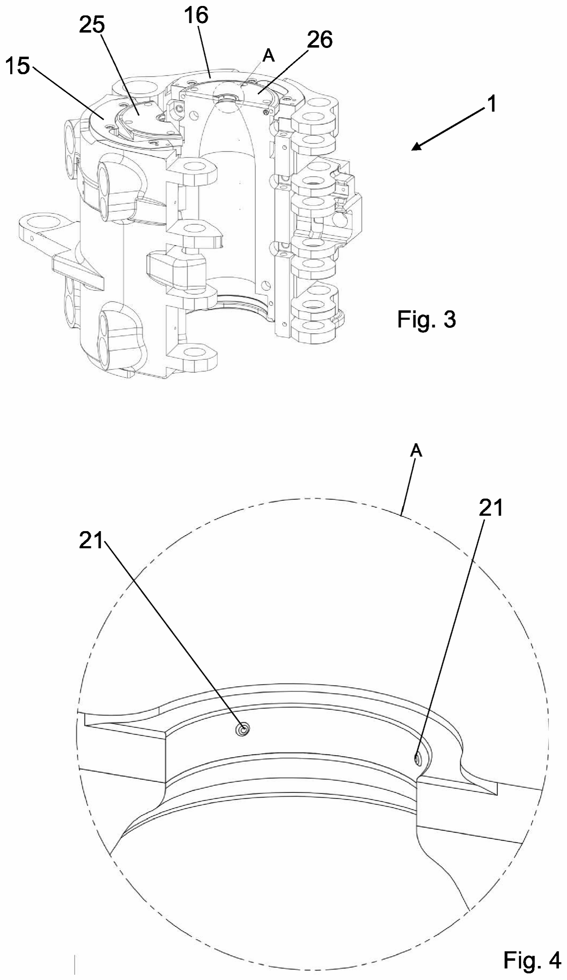

The blowing mold 1, or mold 1, is adapted to be opened and closed. In particular, mold 1 may pass from a closed configuration (Figure 1) to an open configuration (Figure 3), and vice versa.

Mold 1 comprises at least two parts 25, 26 which form a support 2, or striker plate, when mold 1 is closed.

Preferably, in all the embodiments, the number of said at least two parts 25, 26 is equal to two (as in the example disclosed).

In particular, support 2 preferably is formed by two parts 25, 26 when mold 1 is closed. For example, each part 25, 26 substantially is a plate substantially having the shape of a circular half-crown. When the mold is closed, support 2 substantially is a plate substantially having the shape of a circular crown. The parts 25, 26 preferably are made of steel.

The two parts 25, 26 in particular are adapted to approach each other during the closure of mold 1 and to move away from each other during the opening of mold 1. In particular, mold 1 comprises two half-molds 15, 16 adapted to move away from and approach each other; more specifically, the two half-molds 15, 16 are hinged to each other so that mold 1 may be opened and closed. Each part 25, 26 of said two parts 25, 26 is fixed to a respective half-mold 15, 16. Preferably, each part 25, 26 is disassemblable from the respective half-mold 15, 16.

The aforesaid support 2 is adapted to abut against the neck ring 92 of preform 9, or in other words, the neck ring 92 of preform 9 is adapted to abut against said support 2. Support 2 in particular is a support for the neck ring 92 of preform 9. In particular, support 2 is adapted to come into contact with the lower surface of the neck ring 92 (the lower surface in particular is distal from the opening of the preform). Advantageously, support 2 has a surface 20 provided with one or more protrusions 21 adapted to come into contact with the portion 931 of preform 9 below the neck ring 92, in particular to prevent a rotation thereof, in particular when preform 9 is arranged in mold 1. In particular, each part 25, 26 defines a respective portion of said surface 20.

In other words, at least one part 25, 26 of said at least two parts 25, 26 is provided with one or more protrusions adapted to come into contact with the portion 931 of preform 9 below the neck ring 92, in particular to prevent a rotation thereof.

The one or more protrusions 21 in particular are adapted to prevent a rotation of preform 9, which is arranged in mold 1, around axis K, or the central axis, of preform 9, around which neck 93 extends.

Advantageously, said one or more protrusions 21 are adapted to come into contact with the portion 931 of the preform below the neck ring 92. In particular, said one or more protrusions 21 are adapted to come into contact with said portion 931 when preform 9 is in mold 1, and in particular, when mold 1 is closed. "Below" in particular means towards the bottom of preform 9. Portion 931 in particular is immediately below the neck ring 92. In particular, portion 931 extends from the neck ring 92.

Portion 931, for example, has a height along axis K of preform 9, starting from the neck ring 92, up to about 10 mm, for example up to about 5 mm. Portion 931 in particular is an annular portion, being substantially cylindrical in shape, for example. Portion 931 of preform 9, in particular the outer surface of portion 931, preferably is substantially smooth, in particular without projections.

Each protrusion 21 forms substantially a projection or protuberance with respect to surface 20 from which it extends. In other words, each protrusion 21 is a projection or protuberance.

Each protrusion 21 preferably is monolithic with the respective part 25, 26 adapted to form support 2.

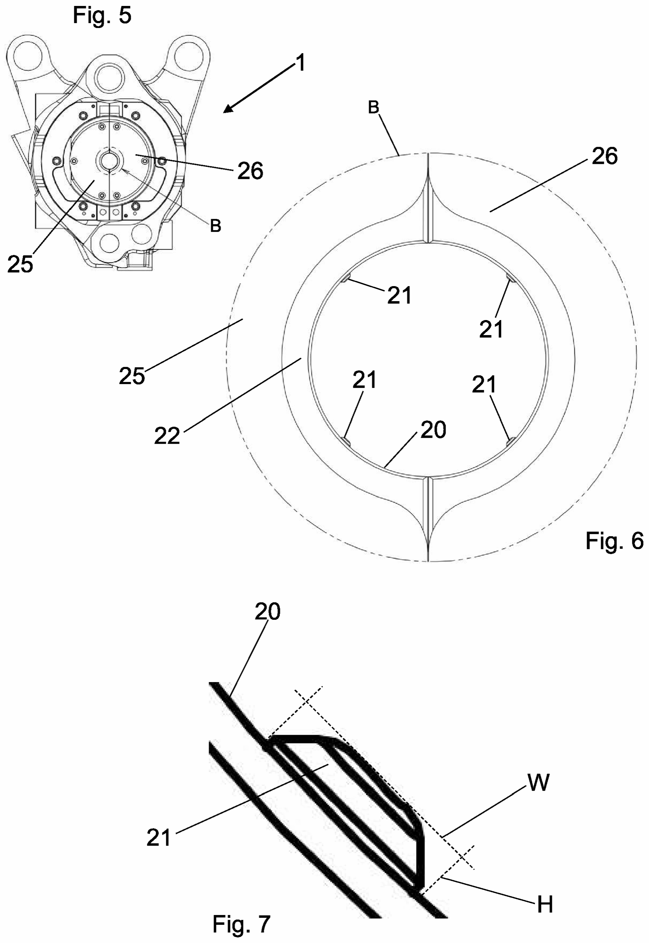

Each protrusion 21 in particular is a radial protrusion, where the expression "radial" is used with reference to mold 1 closed. In particular, each protrusion 21 has a height H thereof (Figure 7) with respect to surface 20 from which it extends. Height H of each protrusion 21 extends along an axis orthogonal to axis X of mold 1, in particular along a radial axis with respect to the axis X of mold 1 when it is closed. In particular, when mold 1 is closed, each protrusion 21 extends radially further inward with respect to surface 20 from which it extends.

The dimensions of each protrusion 21 are in particular selected so as to penetrate the surface of preform 9, in particular without compromising the integrity thereof.

Preferably, height H is from 0.5 to 3 mm.

Each protrusion 21 has a width W (Figure 7), measured substantially perpendicularly to height H. Width W preferably is from 0.5 to 3 mm.

Preferably, the extension of each protrusion 21 along axis X when mold 1 is closed is from 0.5 to 3 mm.

By mere way of non-limiting example, the shape of each protrusion 21 may be frustoconical, conical, cylindrical, semi-spherical, parallelepiped, or combinations thereof.

The one or more protrusions 21 in particular do not extend axially above (i.e., outward) support 2, i.e., they do not extend axially above the respective part 25, 26.

When mold 1 is closed, said surface 20 extends around axis X of the blowing mold. The axis X of mold 1 in particular is defined by mold 1 when it is closed. In particular, the molding surfaces of mold 1 extend around axis X when mold 1 is closed.

When mold 1 is closed, said surface 20 is substantially cylindrical, for example.

Support 2 in particular has a face 22, or annular portion (annular when mold 1 is closed) adapted to abut against the neck ring 92 of preform 9. In particular, each of the parts 25, 26 defines a respective portion of said face 22. The aforesaid surface 20 is transverse, preferably perpendicular, to said face 22 or annular portion. Said one or more protrusions 21 in particular are lower (i.e., more towards the bottom of mold 1) with respect to said face 22, in particular completely lower with respect to said face 22.

When mold 1 is closed, said surface 20 delimits an opening 29, in particular adapted to be crossed by preform 9. When mold 1 is closed, said surface 20 in particular is adapted to surround (in particular, it is adapted to come into contact with) the portion 931 of preform 9 which is below the neck ring 92.

Surface 20 in particular is defined by said two or more parts 25, 26 when mold 1 is closed. When mold 1 is open, each part 25, 26 defines a respective portion adapted to form surface 20.

Surface 20 in particular is an inner surface, more specifically, an inner side surface of support 2. More specifically, surface 20 is an inner surface, more specifically an inner side surface, of mold 1, in particular when it is closed. Surface 20 is a molding surface of mold 1.

The one or more protrusions 21 in particular are inside mold 1, in particular completely inside mold 1, in particular when mold 1 is closed. In other words, the one or more protrusions 21 extend into the molding cavity of mold 1, in particular the one or more protrusions 21 extend completely into the molding cavity of mold 1. The number of protrusions 21 may be equal to one or greater than one.

When there is only one protrusion 21, only one of the two parts 25, 26 is provided with a protrusion 21, for example.

Preferably, two or more protrusions 21 are provided.

In addition to preventing the rotation of the preform around axis K thereof, the protrusions 21 may also allow centering preform 9 with respect to axis X of mold 1 if they are suitably arranged.

For example, for this purpose, two protrusions 21 which are diametrically opposite to each other may be provided, when mold 1 is closed; or two pairs of protrusions 21 may be provided, the protrusions of each pair being diametrically opposite to each other when mold 1 is closed (four protrusions arranged at about 90° from one another when mold 1 closed, for example); or three protrusions 21 may be provided, arranged at about 120° from one another, when mold 1 is closed.

Each of said one or more protrusions 21 is adapted to leave a corresponding impression 91, or indent, on container 90 being molded, in particular on the portion 931 below the neck ring 92. In particular, each protrusion 21 is adapted to penetrate the surface of preform 9 (which is the same surface of the container being blown), leaving a corresponding impression 91. Each impression 91 substantially is a recess, in particular a recess with respect to the rest of the surface of portion 931.

The invention also relates to a container 90, obtained by means of a blowing mold 1, having a neck 93. There are one or more impressions 91 on container 90, each impression 91 being produced by a respective protrusion 21 of said one or more protrusions 21. Each impression 91 in particular is on the portion 931 of container 90 below the neck ring 92.

## Claims

1. A blowing mold (1) for molding a plastic container (90), in particular a bottle, by blow molding a preform (9) having a neck (93) and a neck ring (92),
the blowing mold (1) being adapted to be opened and closed, and comprising at least two parts (25, 26) which, when the blowing mold (1) is closed, form a support (2), or striker plate, adapted to abut against the neck ring (92) of the preform (9);
**characterized in that** a surface (20) of said support (2) is provided with one or more protrusions (21) adapted to come into contact with the portion (931) of the preform (9) below the neck ring (92), in particular to prevent a rotation thereof.

2. A blowing mold (1) according to claim 1, wherein each protrusion (21) of said one or more protrusions (21) has a height (H) from 0.5 to 3 mm with respect to the surface (20) from which it extends; said height (H) in particular being along an axis orthogonal to the axis (X) of the mold (1), the axis (X) being the axis around which the molding surfaces of the mold (1) extend when it is closed.

3. A blowing mold (1) according to claim 2, wherein each protrusion (21) of said one or more protrusions (21) has a width (W) from 0.5 to 3 mm, perpendicular to said height (H).

4. A blowing mold (1) according to any one of the preceding claims, wherein each of said one or more protrusions (21) is adapted to leave a corresponding impression (91) on the container (9) being molded; in particular on the portion (931) below the neck ring (92).

5. A blowing mold (1) according to any one of the preceding claims, wherein said surface (20) is a molding surface of the mold (1).

6. A blowing mold (1) according to any one of the preceding claims, wherein when the mold (1) is closed, said surface (20) of the support (2) is adapted to surround, in particular it is adapted to come into contact with, said portion (931) of the preform (9) below the neck ring (92).

7. A blowing mold (1) according to any one of the preceding claims, wherein when the mold (1) is closed, said one or more protrusions (21) are inside the mold (1), in particular completely inside the mold (1).

8. A blowing mold (1) according to any one of the preceding claims, comprising two or more protrusions (21).

9. A blowing mold (1) according to claim 8, wherein two protrusions (21) of said two or more protrusions (21) are diametrically opposite to each other when the blowing mold (1) is closed; or wherein three protrusions (21) are provided, arranged at about 120° from one another, when the blowing mold (1) is closed.

10. A blowing mold (1) according to any one of the preceding claims, wherein said support (2) has a face (22) adapted to abut against the neck ring (92) of the preform (9); and wherein said surface (20) is transverse, preferably perpendicular, to said face (22).

11. A blowing mold (1) according to any one of the preceding claims, wherein when the blowing mold (1) is closed, said surface (20) delimits an opening (29) adapted to be crossed by the preform (9).

12. A blowing mold (1) according to any one of the preceding claims, wherein when the blowing mold (1) is closed, said two parts (25, 26) define said surface (20) of the support (2).

13. A blowing mold (1) according to any one of the preceding claims, wherein said two parts (25, 26) are adapted to approach each other during the closure of the blowing mold (1) and to move away from each other during the opening of the blowing mold (1).

14. A blowing mold (1) according to any one of the preceding claims, comprising two half-molds (15, 16);
wherein each part (25, 26) of said two parts (25, 26) is fixed to a respective half-mold (15, 16); preferably wherein each of said two parts (25, 26) is disassemblable from the respective half-mold (15, 16).

15. A container (90) obtained by means of a blowing mold (1) according to any one of the preceding claims, on which there are one or more impressions (91), each impression (91) being produced by a respective protrusion (21) of said one or more protrusions (21); in particular wherein each impression (91) is on the portion (931) below the neck ring (92).

## Patentansprüche

1. Blasform (1) zum Formen eines Kunststoffbehälters (90), insbesondere einer Flasche, durch Blasformen eines Vorformlings (9) mit einem Hals (93) und einem Halsring (92),
wobei die Blasform (1) zum Öffnen und Schließen ausgelegt ist und mindestens zwei Teile (25, 26) umfasst, die bei geschlossener Blasform (1) eine Auflage (2) bzw. Schließplatte bilden, die zum Anliegen am Halsring (92) des Vorformlings (9) ausgelegt ist;
**dadurch gekennzeichnet, dass** eine Oberfläche (20) der Auflage (2) mit einem oder mehreren Vorsprüngen (21) versehen ist, die dazu ausgelegt sind, mit dem Abschnitt (931) des Vorformlings (9) unterhalb des Halsrings (92) in Kontakt zu kommen, insbesondere um eine Drehung desselben zu verhindern.

2. Blasform (1) nach Anspruch 1, wobei jeder Vorsprung (21) des einen oder der mehreren Vorsprünge (21) eine Höhe (H) von 0,5 bis 3 mm in Bezug auf die Oberfläche (20), von der er sich erstreckt, aufweist; wobei die Höhe (H) insbesondere entlang einer Achse verläuft, die orthogonal zur Achse (X) der Form (1) ist, wobei die Achse (X) die Achse ist, um die sich die Formoberflächen der Form (1) erstrecken, wenn diese geschlossen ist.

3. Blasform (1) nach Anspruch 2, wobei jeder Vorsprung (21) des einen oder der mehreren Vorsprünge (21) eine Breite (W) von 0,5 bis 3 mm senkrecht zu der Höhe (H) aufweist.

4. Blasform (1) nach einem der vorhergehenden Ansprüche, wobei jeder des einen oder der mehreren Vorsprünge (21) dazu ausgelegt ist, eine entsprechende Vertiefung (91) auf dem zu formenden Behälter (9) zu hinterlassen, insbesondere auf dem Abschnitt (931) unterhalb des Halsrings (92).

5. Blasform (1) nach einem der vorhergehenden Ansprüche, wobei die Oberfläche (20) eine Formoberfläche der Form (1) ist.

6. Blasform (1) nach einem der vorhergehenden Ansprüche, wobei bei geschlossener Form (1) die Oberfläche (20) der Auflage (2) dazu ausgelegt ist, den Abschnitt (931) des Vorformlings (9) unterhalb des Halsrings (92) zu umgeben, insbesondere dazu ausgelegt ist, mit diesem in Kontakt zu kommen.

7. Blasform (1) nach einem der vorhergehenden Ansprüche, wobei sich bei geschlossener Form (1) der eine oder die mehreren Vorsprünge (21) innerhalb der Form (1), insbesondere vollständig innerhalb der Form (1), befinden.

8. Blasform (1) nach einem der vorhergehenden Ansprüche, die zwei oder mehr Vorsprünge (21) umfasst.

9. Blasform (1) nach Anspruch 8, wobei zwei Vorsprünge (21) der zwei oder mehr Vorsprünge (21) einander bei geschlossener Blasform (1) diametral gegenüberliegen; oder wobei drei Vorsprünge (21) vorgesehen sind, die bei geschlossener Blasform (1) in etwa 120° zueinander angeordnet sind.

10. Blasform (1) nach einem der vorhergehenden Ansprüche, wobei die Auflage (2) eine Fläche (22) aufweist, die dazu ausgelegt ist, am Halsring (92) des Vorformlings (9) anzuliegen; und wobei die Oberfläche (20) quer, vorzugsweise senkrecht, zu der Fläche (22) verläuft.

11. Blasform (1) nach einem der vorhergehenden Ansprüche, wobei die Oberfläche (20) bei geschlossener Blasform (1) eine Öffnung (29) begrenzt, die dazu ausgelegt ist, vom Vorformling (9) durchquert zu werden.

12. Blasform (1) nach einem der vorhergehenden Ansprüche, wobei die zwei Teile (25, 26) bei geschlossener Blasform (1) die Oberfläche (20) der Auflage (2) definieren.

13. Blasform (1) nach einem der vorhergehenden Ansprüche, wobei die zwei Teile (25, 26) dazu ausgelegt sind, sich beim Schließen der Blasform (1) einander anzunähern und beim Öffnen der Blasform (1) voneinander weg zu bewegen.

14. Blasform (1) nach einem der vorhergehenden Ansprüche, die zwei Halbformen (15, 16) umfasst;
wobei jeder Teil (25, 26) der zwei Teile (25, 26) an einer jeweiligen Halbform (15, 16) befestigt ist; wobei vorzugsweise jeder der zwei Teile (25, 26) von der jeweiligen Halbform (15, 16) abnehmbar ist.

15. Behälter (90), der mittels einer Blasform (1) nach einem der vorhergehenden Ansprüche erhalten wird und auf dem sich eine oder mehrere Vertiefungen (91) befinden, wobei jede Vertiefung (91) durch einen entsprechenden Vorsprung (21) der einen oder mehreren Vorsprünge (21) erzeugt wird; wobei sich insbesondere jede Vertiefung (91) auf dem Abschnitt (931) unterhalb des Halsrings (92) befindet.

## Revendications

1. Moule de soufflage (1) pour mouler un récipient en plastique (90), en particulier une bouteille, par moulage par soufflage d'une préforme (9) ayant un col (93) et une bague de col (92),
le moule de soufflage (1) étant adapté pour être ouvert et fermé, et comprenant au moins deux parties (25, 26) qui, lorsque le moule de soufflage (1) est fermé, forment un support (2), ou gâche, adapté pour buter contre la bague de col (92) de la préforme (9) ;
**caractérisé en ce qu'**une surface (20) dudit support (2) est pourvue d'une ou plusieurs saillies (21) adaptées pour venir en contact avec la portion (931) de la préforme (9) en dessous de la bague de col (92), en particulier pour empêcher une rotation de celle-ci.

2. Moule de soufflage (1) selon la revendication 1, dans lequel chaque saillie (21) desdites une ou plusieurs saillies (21) a une hauteur (H) de 0,5 à 3 mm par rapport à la surface (20) à partir de laquelle elle s'étend ; ladite hauteur (H) étant en particulier le long d'un axe orthogonal à l'axe (X) du moule (1), l'axe (X) étant l'axe autour duquel les surfaces de moulage du moule (1) s'étendent lorsqu'il est fermé.

3. Moule de soufflage (1) selon la revendication 2, dans lequel chaque saillie (21) desdites une ou plusieurs saillies (21) a une largeur (W) de 0,5 à 3 mm, perpendiculaire à ladite hauteur (H).

4. Moule de soufflage (1) selon l'une quelconque des revendications précédentes, dans lequel chacune desdites une ou plusieurs saillies (21) est adaptée pour laisser une empreinte correspondante (91) sur le récipient (9) en cours de moulage ; en particulier sur la portion (931) sous la bague de col (92).

5. Moule de soufflage (1) selon l'une quelconque des revendications précédentes, dans lequel ladite surface (20) est une surface de moulage du moule (1).

6. Moule de soufflage (1) selon l'une quelconque des revendications précédentes, dans lequel lorsque le moule (1) est fermé, ladite surface (20) du support (2) est adaptée pour entourer, en particulier elle est adaptée pour venir en contact avec, ladite portion (931) de la préforme (9) en dessous de la bague de col (92).

7. Moule de soufflage (1) selon l'une quelconque des revendications précédentes, dans lequel lorsque le moule (1) est fermé, lesdites une ou plusieurs saillies (21) sont à l'intérieur du moule (1), en particulier complètement à l'intérieur du moule (1).

8. Moule de soufflage (1) selon l'une quelconque des revendications précédentes, comprenant deux ou plusieurs saillies (21).

9. Moule de soufflage (1) selon la revendication 8, dans lequel deux saillies (21) desdites deux ou plusieurs saillies (21) sont diamétralement opposées l'une à l'autre lorsque le moule de soufflage (1) est fermé ; ou dans lequel trois saillies (21) sont prévues, disposées à environ 120° l'une de l'autre, lorsque le moule de soufflage (1) est fermé.

10. Moule de soufflage (1) selon l'une quelconque des revendications précédentes, dans lequel ledit support (2) a une face (22) adaptée pour buter contre la bague de col (92) de la préforme (9) ; et dans lequel ladite surface (20) est transversale, de préférence perpendiculaire, à ladite face (22).

11. Moule de soufflage (1) selon l'une quelconque des revendications précédentes, dans lequel lorsque le moule de soufflage (1) est fermé, ladite surface (20) délimite une ouverture (29) adaptée pour être traversée par la préforme (9).

12. Moule de soufflage (1) selon l'une quelconque des revendications précédentes, dans lequel lorsque le moule de soufflage (1) est fermé, lesdites deux parties (25, 26) définissent ladite surface (20) du support (2).

13. Moule de soufflage (1) selon l'une quelconque des revendications précédentes, dans lequel lesdites deux parties (25, 26) sont adaptées pour se rapprocher l'une de l'autre pendant la fermeture du moule de soufflage (1) et pour s'éloigner l'une de l'autre pendant l'ouverture du moule de soufflage (1).

14. Moule de soufflage (1) selon l'une quelconque des revendications précédentes, comprenant deux demi-moules (15, 16) ;
dans lequel chaque partie (25, 26) desdites deux parties (25, 26) est fixée à un demi-moule respectif (15, 16) ; de préférence dans lequel chacune desdites deux parties (25, 26) est démontable du demi-moule respectif (15, 16).

15. Récipient (90) obtenu au moyen d'un moule de soufflage (1) selon l'une quelconque des revendications précédentes, sur lequel il y a une ou plusieurs empreintes (91), chaque empreinte (91) étant produite par une saillie respective (21) desdites une ou plusieurs saillies (21) ; en particulier dans lequel chaque empreinte (91) est sur la portion (931) en dessous de la bague de col (92).
